# EUROPEAN PATENT APPLICATION

(11) **EP 2 113 308 A1**
(43) Date of publication of application: **04.11.2009**
(21) Application number: 08155530.2
(22) Date of filing: 30.04.2008
(51) Int. Cl.: B05B 11/00, B29C 49/00, B65D 1/02

(54) **Container having wall portions with different pressure resistance**

(71) Applicant: Epopack Co., Ltd., Taipei Hsien 25243 (TW)
(72) Inventor: Pan, Patrick, Shiang 25243 Taipei Hsien (TW)
(74) Representative: Chaillot, Geneviève

(57) **Abstract**

A container (70) having wall portions with different pressure resistance includes a chamber with having a predetermined volume for containing an amount of fluid therein, and a mouth (50) located at a top of the chamber and sealed by a fluid dispenser head (80) assembled thereto. The chamber has a super-thin compressible wall (71) of a predetermined thickness that forms a main body of the container, and two or more pressure-resistible non-deformable stiff supporting ribs (72) located on the compressible wall at predetermined positions and having a thickness larger than that of the compressible wall. Each time the fluid dispenser head (80) is depressed, a pressure difference is generated in the container to result a contraction of the compressible wall and dispensing of the contained fluid via the fluid dispenser head. When the contracted compressible wall finally becomes completely flattened, any remained fluid in the container can be pushed out to avoid unnecessary waste of the fluid.

## Description

### FIELD OF THE INVENTION

The present invention relates to a container, and more particularly to a container having wall portions with different pressure resistance, so that when a dispenser that is assembled to a mouth of the container is depressed, a super-thin compressible wall of the container is contracted between stiff supporting ribs due to an effect of pressure difference, and the fluid in the container is squeezed and dispensed via the dispenser.

### BACKGROUND OF THE INVENTION

Generally, a push-type fluid container has a shaped body with a fluid dispenser head assembled to a mouth of the body. The fluid dispenser head has a dip tube downward extended therefrom into a bottom of the container body for leading the contained fluid to the fluid dispenser head under pressure. A disadvantage of the conventional push-type fluid container is that, when the level of the remained fluid is lower than a lower end of the dip tube, the remained fluid could not be dispensed via the dip tube and resulted an unnecessary waste of the fluid.

There is another shaped fluid container internally provided with a follow-up piston. When a fluid dispenser head assembled to the top of the container is depressed to pump out air and thereby produce a pressure change in the container, the follow-up piston is brought to move upward and the fluid in the container is dispensed. The container with follow-up piston includes a large number of components and requires increased material, labor, and time to manufacture, which results in increased manufacturing cost of the container.

The above-described two conventional containers have a common disadvantage. That is, when the contained fluid is used up, the container remained still requires to occupy a large space and inflicts harm on the environment.

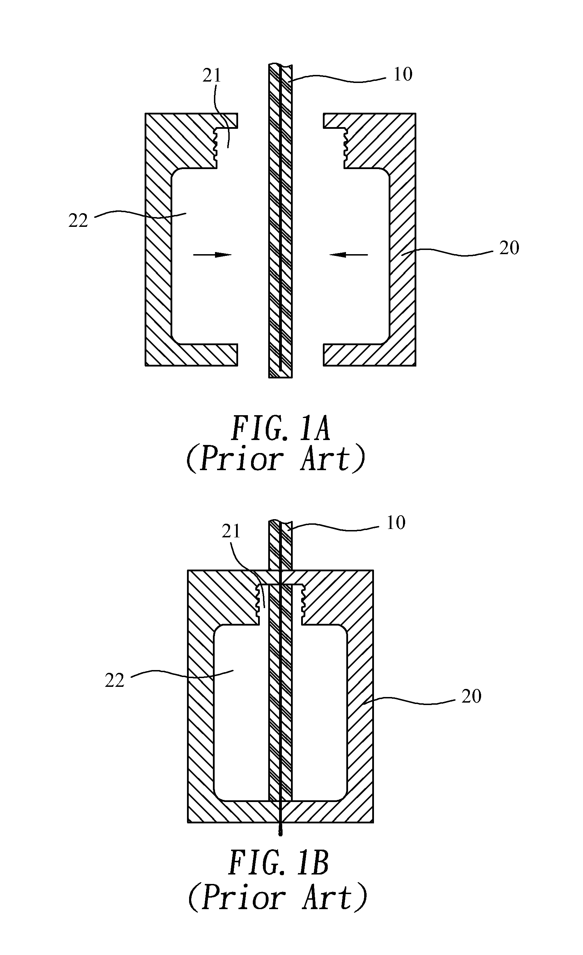

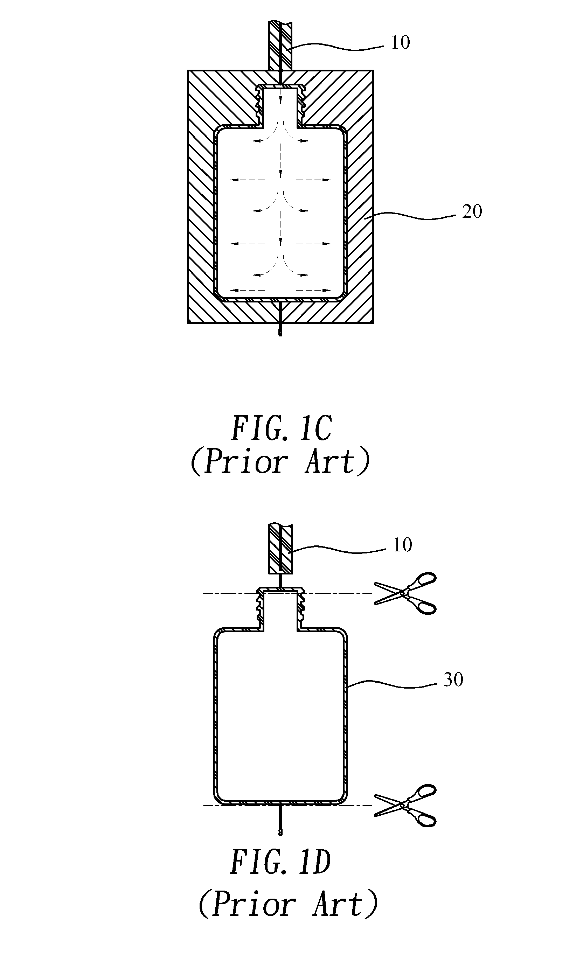

Figs. 1A to 1D show the manner of forming a conventional push-type container through hollow-forming process. As can be seen from Fig. 1A, two mold halves 20 having a specific shape are used to mold the container. The mold halves 20 each have a mouth cavity 21 and a body cavity 22 having a specific volume. A long strip of bag-shaped hollow raw material 10 having a length larger than that of the mold halves 20 is positioned between the two mold halves 20, such that an upper and a lower portion of the bag-shaped raw material 10 are projected from two opposite ends of the mold halves 20. Please further refer to Figs. 1B and 1C. When the two mold halves 20 are pressed to join together, the bag-shaped raw material 10 is fixedly centered between the two mold halves 20. The lower portion of the raw material 10 is compressed and fully flattened by the joined mold halves 20. A blowing device (not shown) is fitted in the upper open end of the bag-shaped raw material 10, and a high-pressure gas is pumped into the raw material 10 via the blowing device, so that the raw material 10 is expanded under pressure to form a container having a shape defined by the mold halves 20. Then, as shown in Fig. 1D, the useless raw material 10 at the top of the molded container 30 and the flattened raw material at the bottom of the molded container are trimmed off to provide a finished container 30 with a flexible wall.

Generally, the container 30 would have a fluid dispenser head assembled thereto. The fluid dispenser head basically includes a spray head projected from an open top of the container 30 to expose to air. The spray head is connected to and moves along with an actuator rod. When a user applies a downward force against the spray head or releases the downward force from the spray head, the actuator rod is brought to reciprocate vertically. Through the vertical displacement of the spray head and the actuator rod, a pressure difference is produced in the container, bringing the contained fluid to be dispensed via the spray head. The above-mentioned container is mass-produced by way of hollow forming process, and has a wall thickness about 0.8 mm to 1 mm. With this thickness, the wall of the container subject to the produced pressure difference is not easily fully compressed to contract and push out the fluid remained in the container, particularly when there is only a small amount of the remaining fluid. Meanwhile, due to the somewhat large wall thickness, the container being compressed tends to deform irregularly, which further prevents the small amount of the remaining fluid from being fully pushed out of the container to thereby form an unnecessary waste of the fluid.

### SUMMARY OF THE INVENTION

A primary object of the present invention is to provide a container having wall portions with different pressure resistance, so that a super-thin compressible wall of the container may contract between stiff supporting ribs due to an effect of pressure difference, and when the super-thin compressible wall finally becomes fully flattened due to multiple times of contraction, any remaining fluid in the container can be pushed out to avoid unnecessary waste.

To achieve the above and other objects, the container having wall portions with different pressure resistance according to the present invention includes a fluid containing chamber with having a predetermined volume for containing an amount of fluid therein, and a mouth located at a top of the fluid container chamber and sealed by a fluid dispenser head assembled thereto. The fluid containing chamber has a super-thin compressible wall of a predetermined thickness that forms a main body of the container, and two or more pressure-resistible non-deformable stiff supporting ribs located on the compressible wall at predetermined positions and having a thickness larger than that of the compressible wall. Whenever the fluid dispenser head is depressed, a pressure difference is generated in the container to result a contraction of the compressible wall between the stiff supporting ribs and dispensing of the contained fluid via the fluid dispenser head. When the compressible wall finally becomes completely flattened due to multiple times of dispensing and contraction, any remained fluid in the container can be pushed out to avoid unnecessary waste of the fluid.

In a preferred embodiment of the present invention, the compressible wall has a wall thickness between 0.13 mm and 0.2 mm, and the supporting ribs have a thickness between 0.5 mm and 1 mm.

In the preferred embodiment, the supporting ribs have a geometrical cross section configured according to the intended use of the container.

In the preferred embodiment, the fluid containing chamber is integrally formed using two mold halves through injection stretched blow molding process, and the supporting ribs are formed by providing grooves at a parting line of the two mold halves.

In a most preferred embodiment, the supporting ribs are formed by providing two corresponding grooves at two opposite sides of the parting line of the two mold halves.

In the present invention, the container may be a bottle, a cup, or a bag.

### BRIEF DESCRIPTION OF THE DRAWINGS

The structure and the technical means adopted by the present invention to achieve the above and other obj ects can be best understood by referring to the following detailed description of the preferred embodiments and the accompanying drawings, wherein
Figs. 1A to 1D show the manner of molding a conventional container through hollow-forming process;
Figs. 2A to 2D show the manner of molding a container of the present invention through injection stretched blow-molding process;
Fig. 3 is a perspective view of a container having wall portions with different pressure resistance according to the present invention;
Fig. 4 is a longitudinal sectional view of Fig. 3;
Fig. 5 is a cross sectional view of Fig. 3;
Fig. 6 shows the use of the container of the present invention to dispense a fluid contained therein; and

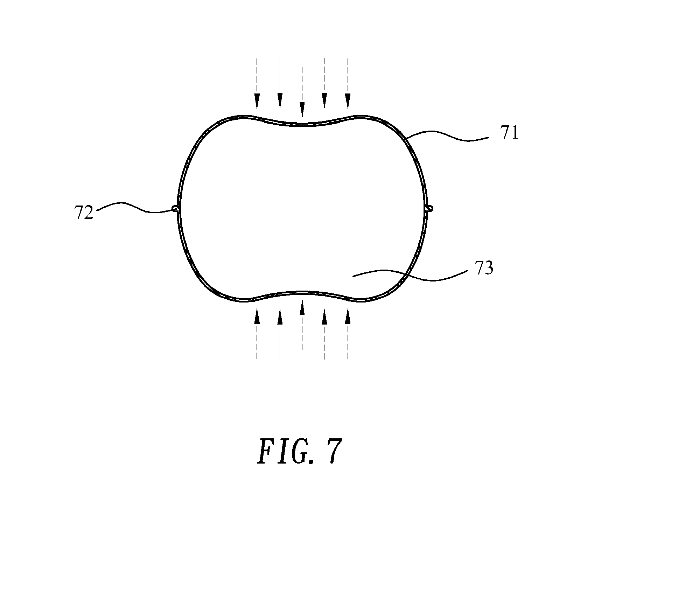

Fig. 7 is a cross sectional view showing how the wall portions of the container of Fig. 6 in use are deformed under pressure.

### DETAILED DESCRIPTION OF THE PREFERRED EMBODIMENTS

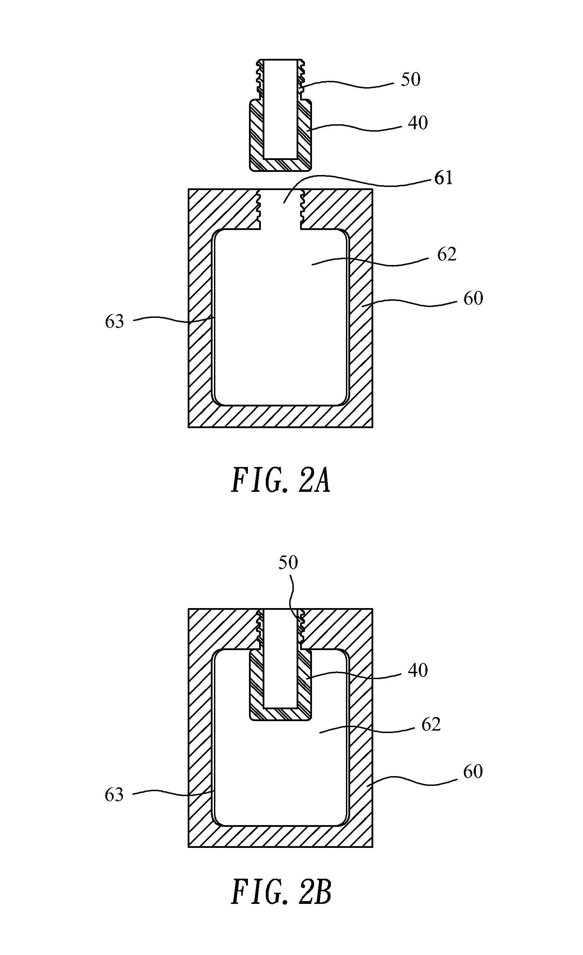

The present invention relates to a container having wall portions with different pressure resistance. Please refer to Figs. 2A to 2D that show an operable manner of molding a container of the present invention through injection stretched blow-molding process.

As shown in Fig. 2A, a blank 40 having a mouth structure 50 and produced from a raw blank by way of injection molding as well as two mold halves 60 defining a mouth cavity 61 and a body cavity 62 are used in forming the container of the present invention. The body cavity 62 is internally provided with spaced grooves 63. In the illustrated operable molding manner, the grooves 63 are located at two opposite sides of a parting line of the two mold halves 60.

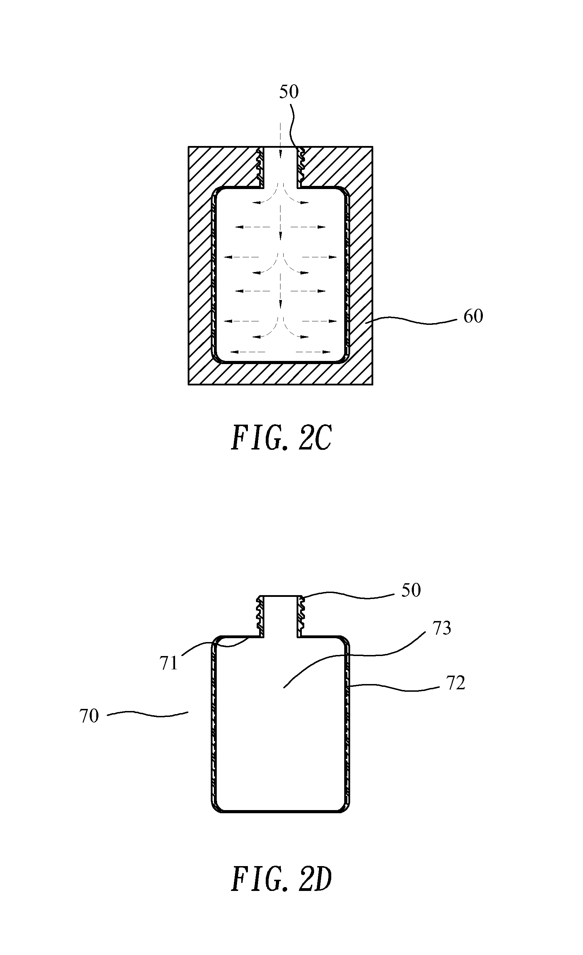

Please refer to Fig. 2B. The blank 40 is positioned at the mouth cavity 61, and is fixedly held thereto when the two mold halves 60 are pressed to join together. Then, as shown in Fig. 2C, an injection-stretched blowing device (not shown) is fitted in the mouth 50 to blow a high-pressure gas of 25kg/cm² into the blank 40, so that the blank 40 is evenly expanded to finally bear against inner wall surfaces of the body cavity 62 and the grooves 63 to form a super-thin, flexible, and compressible wall 71 and two stiff supporting ribs 72, respectively. The supporting ribs 72 is strong enough to resist external air pressure and non-deformable. Please refer to Fig. 2D. A finished container 70 having a uniform and flexible wall structure molded through the above process is removed from the two mold halves 60.

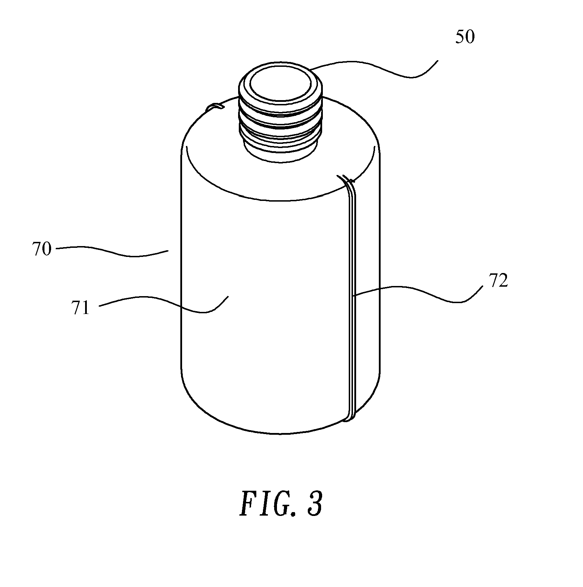

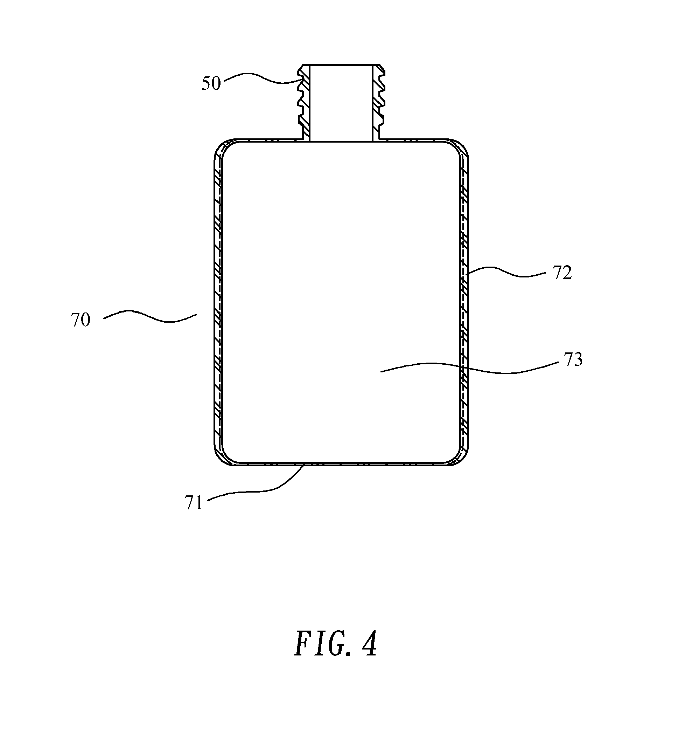

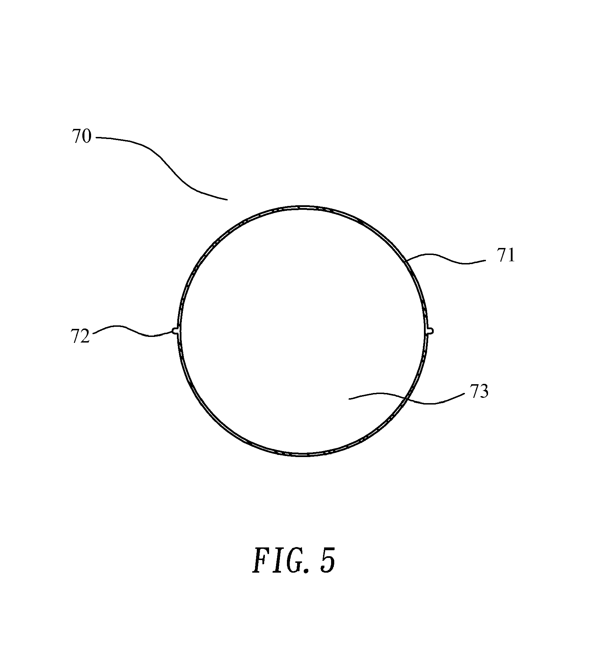

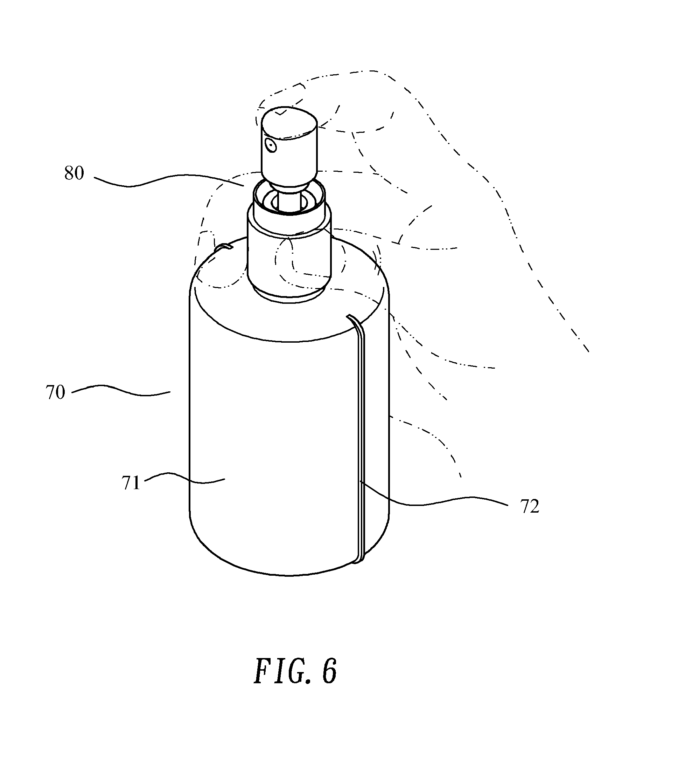

Figs. 3, 4, and 5 are perspective, longitudinal sectional, and cross sectional views, respectively, of the finishedcontainer 70. In a pref erred embodiment of the present invention, the container 70 is configured to have a specific volume for holding an amount of fluid therein. The mouth 50 is formed at a top of the container 70, and a fluid dispenser head 80 may be assembled to the mouth 50, as shown in Fig. 6. The super-thin compressible wall 71 forms a main body of the container 70, and the stiff and non-deformable supporting ribs 72 are located at specific positions on the compressible wall 71. The compressible wall 71 and the stiff supporting ribs 72 together define a fluid containing chamber 73 communicating with the mouth 50 located at the top of the container 70.

In the illustrated preferred embodiment, the supporting ribs 72 are symmetrically located at two opposite sides of the fluid containing chamber 73, and are in the form of two strips longitudinally extending a full length of the fluid containing chamber 73. It is understood the supporting ribs 72 are not limited to the above form and location but may be differently shaped and located. In other words, according to the intended use of the container 70, two or more supporting ribs 72 may be provided at different positions on the fluid containing chamber 73. And, the supporting ribs 72 may be in the form of a line or have any other suitable geometrical cross sections when the molding technique is not a problem.

In an operable embodiment, the fluid containing chamber 73 defined by the compressible wall 71 and the stiff supporting ribs 72 may be molded as a bottle, a cup, a bag, or any other shaped containers.

In the above illustrated preferred embodiment, the compressible wall 71 is a super-thin and flexible wall structure obtained through injection stretched blow-molding process. With the existing injection stretched blow molding technique, the compressible wall 70 may have a wall thickness between 0.13 mm and 0.2 mm, which is an optimal pressure-resistible wall thickness. On the other hand, the stiff supporting ribs 72 for resisting air pressure have a thickness between 0.5 mm and 1 mm.

As can be seen from Fig. 6, a fluid dispenser head 80 may be assembled to the container 70. The fluid dispenser head 80 includes a dispenser member (not shown), such as an airless pump or a valve, extended into the container 70. When a user applies a downward force against the fluid dispenser head 80 or releases the downward force from the fluid dispenser head 80, the dispenser member is brought to reciprocate vertically in the container 70, so that a pressure difference is produced between the internal pressure of the container 70 and the external air pressure to act on the compressible wall 71 and the supporting ribs 72. At this point, with the supporting ribs 72 as supporting lines, the compressible wall 70 would contract to compress the fluid containing chamber 73, bringing the fluid contained in the container 70 to be dispensed via the fluid dispenser head 80. With the increased number of dispensing, the contracted compressible wall 71 of the container 70 gradually reduces an overall volume of the container 70. When the compressible wall 71 of the container 70 is contracted into a completely flattened state, any fluid remained in the container 70 can be pushed out and dispensed via the fluid dispenser head 80 without being wasted.

In the present invention, the container 70 has a main body formed by the super-thin wall 71 with low pressure resistance, and includes the molded stiff supporting ribs 72 to serve as supporting means when the super-thin wall 71 is caused to contract and become deformed. Therefore, the pressure difference produced by depressing the fluid dispenser head 80 can more effectively push the contained fluid out of the container 70 via the fluid dispenser head 80. Meanwhile, with the wall structure of the container 70 according to the present invention, any residual fluid remained in the container 70 can be dispensed for use without being wasted.

The present invention has been described with a preferred embodiment thereof and it is understood that many changes and modifications in the described embodiment can be carried out without departing from the scope and the spirit of the invention that is intended to be limited only by the appended claims.

## Claims

1. A container having wall portions with different pressure resistance, comprising a fluid containing chamber having a predetermined volume for containing an amount of fluid therein, and a mouth located at a top of the fluid containing chamber and sealed by a fluid dispenser head assembled thereto; and the fluid containing chamber having a super-thin compressible wall of a predetermined thickness that forms a main body of the container, and two or more pressure-resistible non-deformable stiff supporting ribs formed on the compressible wall at predetermined positions and having a thickness larger than that of the compressible wall.

2. The container having wall portions with different pressure resistance as claimed in claim 1, wherein the compressible wall has a thickness between 0.13 mm and 0.2 mm.

3. The container having wall portions with different pressure resistance as claimed in claim 2, wherein the supporting ribs each have a thickness between 0.5 mm and 1 mm.

4. The container having wall portions with different pressure resistance as claimed in claim 1, 2, or 3, wherein the supporting ribs have a geometrical cross section that may be determined according to an intended use of the container.

5. The container having wall portions with different pressure resistance as claimed in claim 4, wherein the fluid containing chamber is integrally formed using two mold halves through injection stretched blow molding process, and the supporting ribs are formed by providing grooves at a parting line of the two mold halves.

6. The container having wall portions with different pressure resistance as claimed in claim 5, wherein the supporting ribs are formed by providing two corresponding grooves at two opposite sides of the parting line of the two mold halves.

7. The container having wall portions with different pressure resistance as claimed in claim 1, wherein the fluid containing chamber is in a form selected from the group consisting of a bottle, a cup, and a bag.
